# EUROPÄISCHE PATENTANMELDUNG

(11) **EP 1 030 505 A2**
(43) Veröffentlichungstag der Anmeldung: **23.08.2000**
(21) Anmeldenummer: 00103066.7
(22) Anmeldetag: 15.02.2000
(51) Int. Cl.: H04M 17/00

(54) **Verfahren und Einrichtung zur Abrechnung gebührenpflichtiger Kommunikationsdienste**

(30) Priorität: 15.02.1999 DE 19906213
(71) Anmelder: SIEMENS AKTIENGESELLSCHAFT, 80333 München (DE)
(72) Erfinder: Bergk, Meinhard, 86949 Windach (DE); Lügger, Volker, 58730 Frondenberg (DE)

(57) **Zusammenfassung**

Zur Abrechnung von gebührenpflichtigen Kommunikationsdiensten, die von einem Teilnehmer über eine Endeinrichtung (EE1) eines Kommunikationssystems in Anspruch genommen werden, werden die jeweils anfallenden Gebühren von einer vom Teilnehmer zuzuführenden Geldkarte (GK) abgebucht. Das Abbuchen wird durch eine in einer Endeinrichtung (EE1) oder einer zentralen Abrechnungseinrichtung (AE) des Kommunikationssystems enthaltene Authentifizierungskarte (AK) (Händlerkarte) autorisiert, wobei die Höhe des abzubuchenden Geldbetrages anhand einer über das Kommunikationssystem übertragen Gebühreninformation (GI) bestimmt wird. Ein im Zuge der Abbuchung erstellter, den abgebuchten Geldbetrag repräsentierender Buchungsdatensatz (BS) wird zur Abrechnungseinrichtung (AE) übertragen und dort ausfallsicher abgespeichert.

## Beschreibung

Die Erfindung betrifft ein Verfahren und eine Einrichtung zur Abrechnung gebührenpflichtiger Kommunikationsdienste, wie z.B. Fernsprechdienste, Videodienste, Informationsdienste, Datenübertragungsdienste etc., in einem Kommunikationssystem mit mehreren Endeinrichtungen.

Gebühren, die bei Nutzung eines gebührenpflichtigen Kommunikationsdienstes anfallen, werden meist anhand einer vom Anbieter eines jeweiligen Kommunikationsdienstes zum Kommunikationssystem eines nutzenden Teilnehmers übertragenen Gebühreninformation abgerechnet. Für einen Betreiber eines Kommunikationssystems mit einer Vielzahl von Endeinrichtungen und einer entsprechend großen Anzahl von Teilnehmern ergibt sich dabei das Problem, die anfallenden Gebühren mit den verschiedenen Teilnehmern entsprechend den von ihnen jeweils in Anspruch genommenen Kommunikationsdiensten abzurechnen. Eine einfache Zuordnung der anfallenden Gebühren zu den Endeinrichtungen, von denen aus ein jeweiliger Kommunikationsdienst in Anspruch genommen wird, ist dabei in vielen Fällen nicht ausreichend, da eine Endeinrichtung häufig von mehreren Teilnehmern genutzt wird. In solchen Fällen ist für jeden Teilnehmer eine individuelle Abrechnung erforderlich.

Ein bisher häufig praktiziertes Verfahren zu einer teilnehmerindividuellen Abrechnung von Kommunikationsdiensten basiert auf einer zentralen Kontoführung für jeden Teilnehmer, der einen Kommunikationsdienst über eine Endeinrichtung des Kommunikationssystems nutzen will. Dazu wird für jeden dieser Teilnehmer in einer zentralen, mit dem Kommunikationssystem verbundenen Abrechnungseinrichtung - in der Regel ein Personalcomputer - ein Gebührenkonto eingerichtet, das in Folge mit den für den betreffenden Teilnehmer anfallenden Gebühren belastet wird. Damit bei solchen Abrechnungsverfahren eine anfallende Gebühr einem Teilnehmer unabhängig von der jeweils benutzten Endeinrichtung in Rechnung gestellt werden kann, muß sich der Teilnehmer bei Anforderung eines Kommunikationsdienstes gegenüber dem Kommunikationssystem identifizieren. Dies erfolgt häufig durch Zuführen einer teilnehmerindividuellen Identifizierungskarte, z.B. einer Magnet- oder Chipkarte, oder durch Eingeben einer Identifizierungsinformation, z.B. einem Passwort, an der Endeinrichtung.

Bei privaten Kommunikationssystemen mit einer Vielzahl von Endeinrichtungen und vielen wechselnden Teilnehmern, wie z.B. bei Telefonanlagen in einem Hotel oder Krankenhaus, erfordert eine zuverlässige Verwaltung einer größeren Anzahl von Teilnehmerkonten mit zugeordneten Identifizierungskarten bzw. Passwörtern jedoch einen erheblichen Aufwand. So sind bei bisherigen Abrechnungsverfahren unter anderem aufwendige Ausgabestellen vorgesehen, wo gegen Geldeinwurf eine Identifizierungskarte ausgegeben und die Einrichtung eines Teilnehmerkontos in Höhe des eingeworfenen Geldbetrages veranlaßt wird. Auch ein Abmelden eines Teilnehmers ist bei solchen Verfahren meist mit Verwaltungsaufwand verbunden, da eine ausgegebene Identifizierungskarte beim Abmelden in der Regel wieder einzuziehen und ein auf dem Konto verbliebener Restbetrag wieder auszuzahlen ist. Ein derartiges Abrechnungsverfahren wird beispielsweise von dem im Handel erhältlichen Kommunikationssystem HiMed, Version 5.0 der Firma Siemens AG unterstützt.

Es ist Aufgabe der vorliegenden Erfindung ein Verfahren zur Abrechnung von gebührenpflichtigen Kommunikationsdiensten in einem Kommunikationssystem mit mehreren Endeinrichtungen anzugeben, das weniger aufwendig ist. Außerdem ist eine Einrichtung zur Realisierung des Verfahrens anzugeben.

Gelöst wird diese Aufgabe durch ein Verfahren mit den Merkmalen des Patentanspruchs 1 bzw. des Patentanspruchs 2 und einem Kommunikationssystem mit den Merkmalen des Patentanspruchs 8 bzw. des Patentanspruchs 9.

Erfindungsgemäß werden von einem Teilnehmer beanspruchte, gebührenpflichtige Kommunikationsdienste durch direkte Gebührenabbuchung von einer Geldkarte abgerechnet, die vom Teilnehmer einer Endeinrichtung zuzuführen ist. Eine Geldkarte ist ein zunehmend gebräuchlicheres Mittel zum bargeldlosen Zahlungsverkehr, bei der darauf gespeicherte Datensätze direkt einen Geldbetrag repräsentieren. Um einen Geldbetrag von einer Geldkarte abbuchen zu können, ist eine Authentifizierungskarte erforderlich, die üblicherweise von einem Geldinstitut oder einer ähnlichen autorisierten Einrichtung ausgegeben wird. Durch die Authentifizierungskarte wird die notwendige Sicherheit beim Zahlungsverkehr mittels Geldkarte gewährleistet. Eine solche Authentifizierungskarte wird oft auch als Händlerkarte bezeichnet.

Bei Abbuchung eines vorgegebenen Geldbetrages von einer Geldkarte wird aus einem von der Geldkarte stammenden, dem Geldbetrag entsprechenden Datensatz und einer von der Authentifizierungskarte stammenden Verschlüsselungsinformation ein dem Geldbetrag entsprechender, fälschungssicherer Buchungsdatensatz erstellt, der gegenüber einem Geldinstitut zur Auszahlung dieses Geldbetrages berechtigt. Auf der Geldkarte wird dabei der durch Datensätze repräsentierte Geldbetrag um den abgebuchten Geldbetrag vermindert. Zur Erstellung eines Buchungsdatensatzes ist keine Rückfrage bei einem kontoführenden Geldinstitut o.ä. notwendig. Vielmehr können erstellte Buchungssätze gesammelt und erst zu einem späteren Zeitpunkt gemeinsam einem Geldinstitut übermittelt werden, wo die den Buchungssätzen entsprechenden Geldbeträge dann auf einem Konto des Übermittlers gutgeschrieben werden können.

Durch die direkte Bezahlung von gebührenpflichtigen Kommunikationsdiensten mittels einer einer Endeinrichtung des Kommunikationssystems zuzuführenden Geldkarte ist keine Identifizierung eines jeweiligen Teilnehmers erforderlich. Insbesondere ist keine vorherige Anmeldung von Teilnehmern beim Kommunikationssystem zu Zwecken einer teilnehmerindividuellen Registrierung notwendig. Der mit einer Teilnehmeridentifizierung und Teilnehmerverwaltung einhergehende, erhebliche Aufwand entfällt somit. Damit erweist sich das erfindungsgemäße Verfahren insbesondere für größere Kommunikationssysteme mit einer Vielzahl von wechselnden Teilnehmern als sehr vorteilhaft.

Die Erfindung setzt keine spezielle Vermittlungstechnik beim Kommunikationssystem voraus. So kann die Vermittlungseinrichtung beispielsweise auch durch einen Netzknoten eines Kommunikationsnetzes realisiert sein. Das erfindungsgemäße Verfahren kann somit auch zur Abrechnung paketorientierter Kommunikationsdienste, wie z.B. einer auf dem sogenannten IP-Protokoll basierenden Sprachübertragung (voice over IP), vorteilhaft eingesetzt werden.

Eine zur Abbuchung von einer Geldkarte erforderliche Authentifizierungskarte kann sich erfindungsgemäß bei der Geldkarten-Abbuchungseinrichtung einer Endeinrichtung und/oder bei der an die Vermittlungseinrichtung angekoppelten Abrechnungseinrichtung befinden. Eine der Abrechnungseinrichtung zugehörige Authentifizierungskarte ist insofern vorteilhaft, als daß nicht für jede abbuchungsfähige Endeinrichtung eine eigene Authentifizierungskarte benötigt wird. Allerdings ist in diesem Fall für jeden einzelnen Abbuchungsvorgang der zur Authentifizierung und Erstellung des Buchungsdatensatzes notwendige Datenaustausch zwischen jeweiliger Geldkarte und Authentifizierungskarte über das Kommunikationssystem durchzuführen, wodurch dessen Übertragungslast erhöht wird. Bei einer Geldkarten-Abbuchungseinrichtung mit eigener Authentifizierungskarte belastet der erforderliche Datenaustausch zwischen zugeführter Geldkarte und der Authentifizierungskarte das Kommunikationssystem dagegen nicht.

Vorteilhafte Ausführungsformen der Erfindung sind in den Unteransprüchen angegeben.

Eine Endeinrichtung mit eigener Authentifizierungskarte kann gemäß einer vorteilhaften Ausführungsform der Erfindung einen lokalen Buchungssatzspeicher aufweisen. Damit können durch die Geldkarten-Abbuchungseinrichtung dieser Endeinrichtung erzeugte Buchungssätze in der Endeinrichtung bis zu einem regelmäßig erfolgenden Abruf durch die Abrechnungseinrichtung zwischengespeichert werden. Ein solcher Abruf kann vorzugsweise in Phasen niedriger Systembelastung, z.B. nachts, durchgeführt werden.

Für einen zur Erstellung von Buchungsdatensätzen notwendigen Datenaustausch zwischen Authentifizierungskarte und Geldkarte, für eine Übertragung erstellter Buchungsdatensätze sowie für eine Übertragung von Gebühreninformation können die Kommunikationsinfrastruktur und insbesondere die Vermittlungsfunktionen des Kommunikationssystems in vorteilhafter Weise genutzt werden. So können die in diesem Zusammenhang zu übertragenden Daten vorzugsweise über vom Kommunikationssystem bereitgestellte Signalisierungskanäle übertragen werden.

Gemäß einer weiteren vorteilhaften Ausführungsform der Erfindung sind die Endeinrichtung, an der ein gebührenpflichtiger Kommunikationsdienst in Anspruch genommen wird, und die Endeinrichtung, an der die anfallenden Gebühren bezahlt werden, identisch.

Die Abrechnung der anfallenden Gebühren erfolgt anhand einer Gebühreninformation, die meist vom Anbieter eines genutzten Kommunikationsdienstes in das Kommunikationssystem, von dem aus der Kommunikationsdienst genutzt wird, übertragen wird. Die Gebühreninformation wird dabei oft in Form eines Gebührenimpulses übertragen, der die Fälligkeit eines vorbestimmten Geldbetrages signalisiert. Alternativ dazu kann auch eine Gebühreninformation übertragen werden, die die Höhe des jeweils fälligen Geldbetrages angibt. Dies ist insbesondere dann vorteilhaft, wenn häufig wechselnde Gebühren anfallen. Darüber hinaus kann eine vom Anbieter eines genutzten Kommunikationsdienstes übermittelte Gebühreninformation im Kommunikationssystem vor ihrer Weiterübermittlung an Endeinrichtungen oder die Abrechnungseinrichtung noch modifiziert werden. So kann beispielsweise der von der Gebühreninformation angezeigte und abzubuchende Geldbetrag erhöht werden, um zusätzliche Aufwendungen des Betreibers des Kommunikationssystems zu decken.

Die Erfindung wird nachfolgend anhand bevorzugter Ausführungsbeispiele unter Bezugnahme auf die Zeichnung näher erläutert.

Dabei zeigen jeweils in schematischer Darstellung:
- Fig 1: ein an ein Kommunikationsnetz angeschlossenes Kommunikationssystem mit in Endeinrichtungen enthaltenen Authentifizierungskarten beim Abbuchen einer fälligen Gebühr,
- Fig 2: das selbe Kommunikationssystem beim Abfragen von Buchungssätzen durch eine Abrechnungseinrichtung,
- Fig 3: ein an ein Kommunikationsnetz angeschlossenes Kommunikationssystem mit einer in einer Abrechnungseinrichtung enthaltenen Authentifizierungskarte.

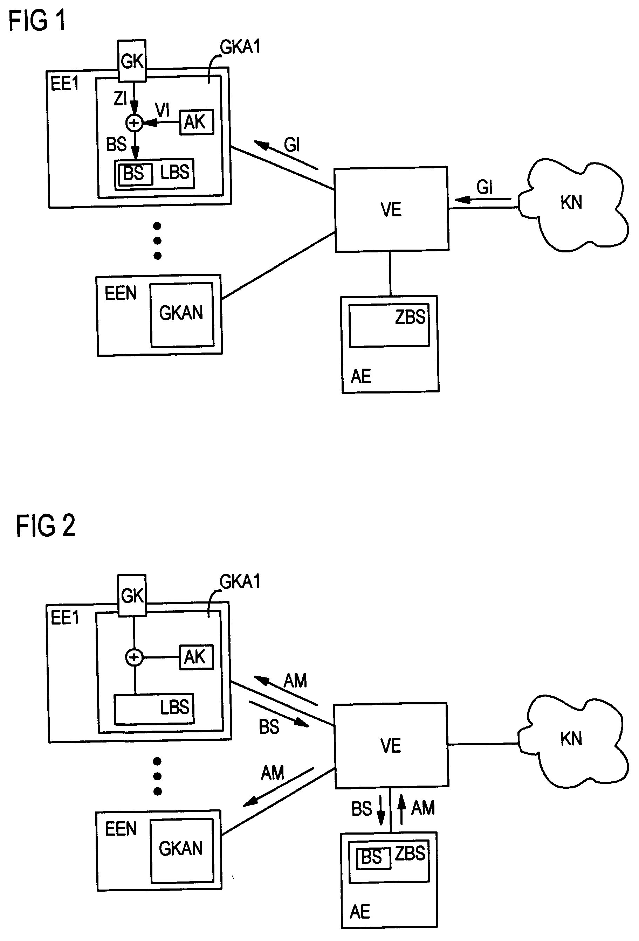

In Fig 1 bis Fig 3 ist jeweils ein - vorzugsweise privates - Kommunikationssystem schematisch dargestellt, das an ein Kommunikationsnetz KN, z.B. ein öffentliches ISDN-Netz, angeschlossen ist. Das Kommunikationssystem weist jeweils eine Vermittlungseinrichtung VE, Endeinrichtungen EE1,...,EEN sowie eine Abrechnungseinrichtung AE auf. Die Endeinrichtungen EE1,...,EEN, die Abrechnungseinrichtung AE und das Kommunikationsnetz KN sind dabei jeweils an die Vermittlungseinrichtung VE, vorzugsweise über ISDN-Schnittstellen, wie z.B. S₀- oder U_{P0}-Schnittstellen, gekoppelt. Die Endeinrichtungen EE1,...,EEN enthalten weiterhin je eine Geldkarten-Abbuchungseinrichtung GKA1,...,GKAN. Aus Gründen der Übersichtlichkeit sind nur bei der Geldkarten-Abbuchungseinrichtung GKA1 innere Funktionskomponenten dargestellt. Weiterhin enthält die Abrechnungseinrichtung AE, die beispielsweise als Personalcomputer realisiert sein kann, jeweils einen zentralen Buchungssatzspeicher ZBS.

Ein erstes Ausführungsbeispiel der Erfindung wird durch die Figuren 1 und 2 veranschaulicht, die das selbe Kommunikationssystem in jeweils unterschiedlichen Verfahrensphasen zeigen. Die in den Endeinrichtungen EE1,...,EEN dieses Kommunikationssystems enthaltenen Geldkarten-Abbuchungseinrichtungen GKA1,...,GKAN weisen in diesem ersten Ausführungsbeispiel jeweils eine eigene Authentifizierungskarte AK sowie einen lokalen Buchungssatzspeicher LBS auf. Der Geldkarten-Abbuchungseinrichtung GKA1 ist ferner eine Geldkarte GK zugeführt.

Fig 1 zeigt das Kommunikationssystem beim Abbuchen einer fälligen Gebühr von der Geldkarte GK. Die Geldkarte GK wurde von einem Teilnehmer der Geldkarten-Abbuchungseinrichtung GKA1 zugeführt, um einem gebührenpflichtigen Kommunikationsdienst des Kommunikationsnetzes KN über die Endeinrichtung EE1 nutzen zu können. Im Rahmen der Nutzung dieses Kommunikationsdienstes wird vom Kommunikationsnetz KN eine die anfallenden Gebühren anzeigende Gebühreninformation GI zur Vermittlungseinrichtung VE und von dort - gegebenenfalls in modifizierter Form - zur Endeinrichtung EE1 übertragen. Die Übertragung der Gebühreninformation GI kann dabei vorzugsweise im D-Kanal einer von der Vermittlungseinrichtung VE vermittelten ISDN-Verbindung erfolgen. Anhand der Gebühreninformation GI wird der von der Geldkarte GK abzubuchende Geldbetrag bestimmt und ein entsprechender Abbuchungsauftrag an die Geldkarte GK übermittelt. Die Geldkarte GK gibt daraufhin eine diesem Geldbetrag entsprechende Zahlungsinformation ZI aus, die mit einer von der Authentifizierungskarte AK ausgegebenen Verschlüsselungsinformation VI verknüpft wird, um einen fälschungssicheren, den Geldbetrag repräsentierenden Buchungsdatensatz BS zu erstellen. Außerdem wird das auf der Geldkarte GK durch Datensätze repräsentierte Guthaben um diesen Geldbetrag vermindert. Der erstellte Buchungsdatensatz BS wird anschließend im lokalen Buchungssatzspeicher LBS der Geldkarten-Abbuchungseinrichtung GKA1 ausfallsicher gespeichert.

Fig 2 zeigt das Kommunikationssystem bei einer nachfolgenden Abfrage von erstellten Buchungsdatensätzen. Eine solche Abfrage wird in regelmäßigen Zeitabständen von der Abrechnungseinrichtung AE initiiert. Die Geldkarte GK muß dazu nicht mehr der Geldkarten-Abbuchungseinrichtung GKA1 zugeführt sein. Zur Abfrage sendet die Abrechnungseinrichtung AE eine Abfragemeldung AM über die Vermittlungseinrichtung VE an die abbuchungsfähigen Endeinrichtungen EE1,...,EEN. Die Abfragemeldung AM veranlaßt in den Geldkarten-Abbuchungseinrichtungen GKA1,...,GKAN ein Auslesen des jeweiligen lokalen Buchungssatzspeichers LBS und ein Übertragen der jeweils ausgelesenen Buchungsdatensätze zur Abrechnungseinrichtung AE. Nach Auslesen eines Buchungsdatensatzes aus einem lokalen Buchungssatzspeicher wird der Buchungssatz im lokalen Buchungssatzspeicher selbst gelöscht. Die Übertragung der Abfragemeldung AM und der abgefragten Buchungssätze kann vorzugsweise über von der Vermittlungseinrichtung VE vermittelte Signalisierungsverbindungen, beispielsweise gemäß D-Kanalprotokoll, erfolgen. Im vorliegenden, ersten Ausführungsbeispiel enthält nur der lokale Buchungssatzspeicher LBS der Geldkarten-Abbuchungseinrichtung GKA1 einen gespeicherten Buchungsdatensatz BS, der ausgelesen und über die Vermittlungseinrichtung VE zur Abrechnungseinrichtung AE übermittelt wird. Der zur Abrechnungseinrichtung AE übertragene Buchungsdatensatz BS wird schließlich im zentralen Buchungssatzspeicher ZBS der Abrechnungseinrichtung AE ausfallsicher abgespeichert.

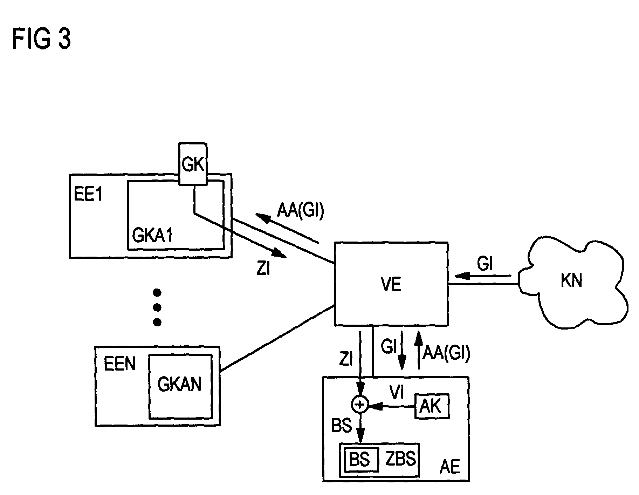

Fig 3 veranschaulicht ein zweites Ausführungsbeispiel der Erfindung, bei dem die Geldkarten-Abbuchungseinrichtungen GKA1,...,GKAN keine eigene Authentifizierungskarte und keinen lokalen Buchungssatzspeicher aufweisen. Statt dessen ist eine zentrale Authentifizierungskarte AK in der Abrechnungseinrichtung AE enthalten. Somit ist ein zur Abbuchung einer anfallenden Gebühr von einer der Geldkarten-Abbuchungseinrichtung GKA1 zugeführten Geldkarte GK erforderlicher Datenaustausch mit der Authentifizierungskarte AK über die Vermittlungseinrichtung VE zu führen.

Bei Nutzung eines gebührenpflichtigen Kommunikationsdienstes über die Endeinrichtung EE1 wird die vom Kommunikationsnetz KN zum Kommunikationssystem übertragene Gebühreninformation GI über die Vermittlungseinrichtung VE zur Abrechnungseinrichtung AE übertragen. Anhand der Gebühreninformation GI wird der von der Geldkarte GK abzubuchende Geldbetrag bestimmt und ein entsprechender Abbuchungsauftrag AA(GI) von der Abrechnungseinrichtung AE über die Vermittlungseinrichtung VE zur Endeinrichtung EE1 übertragen. Die der Geldkarten-Abbuchungseinrichtung GKA1 zugeführte Geldkarte GK gibt daraufhin eine dem Geldbetrag entsprechende Zahlungsinformation ZI aus, die über die Vermittlungseinrichtung VE zur Abrechnungseinrichtung AE übertragen wird. Das auf der Geldkarte GK durch Datensätze repräsentierte Guthaben wird dabei um diesen Geldbetrag vermindert. In der Abrechnungseinrichtung AE wird die übermittelte Zahlungsinformation ZI mit einer von der Authentifizierungskarte AK ausgegebenen Verschlüsselungsinformation VI verknüpft, um einen fälschungssicheren, den Geldbetrag repräsentierenden Buchungsdatensatz BS zu erstellen, der schließlich im zentralen Buchungssatzspeicher ZBS der Abrechnungseinrichtung AE ausfallsicher gespeichert wird.

Bei beiden Ausführungsbeispielen werden im zentralen Buchungssatzspeicher ZBS alle von den Geldkarten-Abbuchungseinrichtungen GKA1,...,GKAN empfangenen Buchungsdatensätze zunächst gesammelt, um zu einem späteren Zeitpunkt gemeinsam einem Geldinstitut gegen Gutschrift der dadurch repräsentierten Geldbeträge übermittelt zu werden.

## Patentansprüche

1. Verfahren zur Abrechnung gebührenpflichtiger Kommunikationsdienste in einem Kommunikationssystem mit einer Vermittlungseinrichtung (VE) und mehreren daran angeschlossenen Endeinrichtungen (EE1,...,EEN), bei dem
a) von der Vermittlungseinrichtung (VE) für einen von dieser einer ersten Endeinrichtung (EE1) zur Verfügung gestellten, gebührenpflichtigen Kommunikationsdienst eine Gebühreninformation (GI) zu einer zweiten Endeinrichtung (EE1) übertragen wird,
b) von der zweiten Endeinrichtung (EE1) mit Hilfe einer dieser zugehörigen Authentifizierungskarte(AK) ein Abbuchen eines durch die Gebühreninformation (GI) angezeigten Geldbetrages von einer der zweiten Endeinrichtung (EE1) zugeführten Geldkarte (GK) veranlaßt wird, wobei ein Buchungsdatensatz (BS) erzeugt wird, der diesen Geldbetrag repräsentiert, und
c) der Buchungsdatensatz (BS) von der zweiten Endeinrichtung (EE1) über die Vermittlungseinrichtung (VE) zu einer an diese angekoppelten Abrechnungseinrichtung (AE) übertragen und dort gespeichert wird.

2. Verfahren zur Abrechnung gebührenpflichtiger Kommunikationsdienste in einem Kommunikationssystem mit einer Vermittlungseinrichtung (VE) und mehreren daran angeschlossenen Endeinrichtungen (EE1,...,EEN), bei dem
a) von der Vermittlungseinrichtung (VE) für einen von dieser einer ersten Endeinrichtung (EE1) zur Verfügung gestellten, gebührenpflichtigen Kommunikationsdienst eine Gebühreninformation (GI) zu einer an die Vermittlungseinrichtung (VE) angekoppelten Abrechnungseinrichtung (AE) übertragen wird,
b) von der Abrechnungseinrichtung (AE) mit Hilfe einer dieser zugehörigen Authentifizierungskarte (AK) ein Abbuchen eines durch die Gebühreninformation (GI) angezeigten Geldbetrages von einer einer zweiten Endeinrichtung (EE1) zugeführten Geldkarte (GK) und ein Erzeugen eines diesen Geldbetrag repräsentierenden Buchungsdatensatzes (BS) veranlaßt wird, wobei ein hierfür erforderlicher Datenaustausch zwischen der Geldkarte (GK) und der Authentifizierungskarte (AK) durch die Vermittlungseinrichtung (VE) gesteuert wird, und
c) der erzeugte Buchungsdatensatz (BS) in der Abrechnungseinrichtung (AE) gespeichert wird.

3. Verfahren nach Anspruch 1,
**dadurch gekennzeichnet,**
daß ein von einer Endeinrichtung (EE1) erzeugter Buchungsdatensatz in dieser Endeinrichtung (EE1) bis zu einem regelmäßig erfolgenden Abruf durch die Abrechnungseinrichtung (AE) zwischengespeichert wird.

4. Verfahren nach Anspruch 2,
**dadurch gekennzeichnet,**
daß der Datenaustausch zwischen Geldkarte (GK) und Authentifizierungskarte (AK) über einen vom Kommunikationssystem bereitgestellten Signalisierungskanal erfolgt.

5. Verfahren nach einem der vorhergehenden Ansprüche,
**dadurch gekennzeichnet,**
daß der Buchungsdatensatz (BS) über einen vom Kommunikationssystem bereitgestellten Signalisierungskanal übertragen wird.

6. nach einem der vorhergehenden Ansprüche,
**dadurch gekennzeichnet,**
daß die erste Endeinrichtung (EE1) und die zweite Endeinrichtung (EE1) identisch sind.

7. Verfahren nach einem der vorhergehenden Ansprüche,
**dadurch gekennzeichnet,**
daß als Gebühreninformation (GI) ein die Fälligkeit einer vorgegebenen Gebühr anzeigender Gebührenimpuls übertragen wird.

8. Kommunikationssystem mit einer Vermittlungseinrichtung (VE), an die mehrere Endeinrichtungen (EE1,...,EEN) sowie eine Abrechnungseinrichtung (AE) zur Abrechnung von durch die Vermittlungseinrichtung (VE) zur Verfügung gestellten, gebührenpflichtigen Kommunikationsdiensten angekoppelt sind, wobei
- die Endeinrichtungen (EE1,...,EEN) jeweils eine zur Aufnahme einer Authentifizierungskarte (AK) vorgesehene Geldkarten-Abbuchungseinrichtung (GKA1,...,GKAN) zum Abbuchen eines durch eine der Endeinrichtung (EE1,...,EEN) von der Vermittlungseinrichtung (VE) übermittelte Gebühreninformation (GI) angezeigten Geldbetrages von einer zugeführten Geldkarte (GK) und zum Erzeugen eines diesen Geldbetrag repräsentierenden Buchungsdatensatzes (BS) aufweisen, und
- die Abrechnungseinrichtung (AE) einen zentralen Buchungssatzspeicher (ZBS) zum Speichern der erzeugten und von den Endeinrichtungen (EE1,...,EEN) über die Vermittlungseinrichtung (VE) zur Abrechnungseinrichtung (AE) übertragenen Buchungsdatensätze (BS) aufweist.

9. Kommunikationssystem mit einer Vermittlungseinrichtung (VE), an die mehrere Endeinrichtungen (EE1,...,EEN) sowie eine Abrechnungseinrichtung (AE) zur Abrechnung von durch die Vermittlungseinrichtung (VE) zur Verfügung gestellten, gebührenpflichtigen Kommunikationsdiensten angekoppelt sind, wobei
- die Endeinrichtungen (EE1,...,EEN) jeweils eine durch Datenaustausch mit einer Authentifizierungskarte (AK) zu autorisierende Geldkarten-Abbuchungseinrichtung (GKA1,...,GKAN) zum Abbuchen eines Geldbetrages von einer zugeführten Geldkarte (GK) aufweisen, und
- die Abrechnungseinrichtung (AE)
- zur Aufnahme der zum Abbuchen berechtigenden Authentifizierungskarte (AK) vorgesehen ist und
- Mittel zur Durchführung eines für ein Abbuchen von einer Geldkarte (GK) erforderlichen, über die Vermittlungseinrichtung (VE) durchzuführenden Datenaustausches mit einer Geldkarten-Abbuchungseinrichtung (GKA1,...,GKAN), wobei der abzubuchende Geldbetrag durch eine von der Vermittlungseinrichtung (VE) übermittelte Gebühreninformation (GI) bestimmt ist, und
- einen zentralen Buchungssatzspeicher (ZBS) zum Speichern eines beim Abbuchen erzeugten, diesen Geldbetrag repräsentierenden Buchungsdatensatzes (BS) aufweist.

10. Kommunikationssystem nach Anspruch 8,
**dadurch gekennzeichnet,**
daß die Endeinrichtungen (EE1,...,EEN) lokale Buchungssatzspeicher (LBS) zum Zwischenspeichern von Buchungsdatensätzen (BS) aufweisen.

11. Kommunikationssystem nach einem der Ansprüche 8 bis 10,
**dadurch gekennzeichnet,**
daß die Abrechnungseinrichtung (AE) durch einen Personalcomputer realisiert ist.
